# NOUVEAU FASCICULE DE BREVET EUROPEEN

(11) **EP 2 825 428 B2**
(45) Date de publication et mention de la décision concernant l'opposition: **06.03.2024**
(45) Mention de la délivrance du brevet: 01.02.2017
(21) Numéro de dépôt: 13715333.4
(22) Date de dépôt: 15.03.2013
(51) Int. Cl.: B60T 3/00, B65G 69/00

(54) **DISPOSITIF DE CALAGE A QUAI DE VEHICULE DE TRANSPORT DE MARCHANDISES ET INSTALLATION LE COMPORTANT**
FAHRZEUGPIERRADBLOCKANORDNUNG UND -INSTALLATION
VEHICLE DOCK WHEEL CHOCK DEVICE AND INSTALLATION COMPRISING SUCH A DEVICE

(30) Priorité: 15.03.2012 FR 1200797
(43) Date de publication de la demande: 21.01.2015
(73) Titulaire: A.S.A. Fermetures, 64230 Lescar (FR)
(72) Inventeur: BELLOTA, Ignace, F-64110 Laroin (FR)
(74) Mandataire: Aquinov
(86) Numéro de dépôt international: PCT/FR2013/050550
(87) Numéro de publication internationale: WO 2013/136031

(56) Documents cités:
- EP-A1- 2 236 445
- EP-A1- 2 736 336
- GB-A- 2 262 493
- US-A1- 2002 141 852
- US-A1- 2009 194 375
- US-A1- 2009 283 999
- US-A1- 2011 162 916

## Description

### Domaine technique.

La présente invention est du domaine des matériels utilisés pour immobiliser les véhicules de transport de marchandises contre un quai de transbordement et concerne plus particulièrement un dispositif de calage à quai, actionnable manuellement.

### État de la technique antérieure.

On sait que les véhicules de transport de marchandises, en vue du transbordement des marchandises, doivent être immobilisés contre le quai de transbordement par des dispositifs étrangers au véhicule. Typiquement, ces dispositifs sont installés en fixation, face au quai, soit sur l'aire de stationnement du véhicule soit latéralement à cette dernière. Ils comprennent habituellement un châssis prévu pour être solidement fixé au sol et une ou des cales installées sur le châssis et pouvant occuper une position effacée et une position de blocage de la ou des roues du véhicule. Selon cette position, la ou chaque cale est placée en avant et au contact de la roue correspondante du véhicule de façon à interdire tout mouvement vers l'avant de ce dernier.

On connaît de la demande de brevet US 2009/0194375 un dispositif manuel de calage à quai de véhicule de transport de marchandises. Ce dispositif comprend un bâti sous forme d'un rail de guidage rectiligne sur lequel est installée une tête coulissante portant une cale de blocage de l'une des roues du véhicule. Cette cale est montée sur la tête de manière transversalement mobile entre une position de blocage et une position d'effacement.

Le document US2002/0141852 A1 décrit un dispositif de calage comme décrit dans le préambule de la revendication 1.

Le rail de guidage porte une crémaillère et la tête coulissante porte de manière articulée, un bras de blocage et d'actionnement doté d'un doigt de blocage, amené par pivotement du bras, entre deux dents de la crémaillère pour assurer le blocage en translation de la tête le long du rail. Le bras de blocage et d'actionnement est doté à distance de la tête d'une coulisse dans laquelle est monté un coulisseau solidaire d'un guide horizontal engagé de manière coulissante dans un alésage de guidage formé dans un flanc vertical porté par la tête, la cale étant portée par ce guide horizontal.

La cale est formée par un flanc vertical porté par le guide horizontal et par un second guide horizontal, inférieur.

Ce dispositif est tributaire de la bonne planéité du sol. En effet, la pression pouvant être exercée par la roue est reprise par la cale qui alors appuie sur le sol. Or pour la plupart des aires de stationnement associées aux quais de transbordement, les deux zones de passage des roues des véhicules, sous l'effet notamment du poids de ces véhicules, sont fortement déformées, et très rarement en bon état. Ceci est accentué par le fait que les roues des véhicules, lorsque ces derniers sont acculés aux quais, se situent quasiment dans les mêmes zones de l'aire de stationnement ce qui contribue fortement au défoncement de ces aires de stationnement.

En outre la cale du dispositif selon la demande de brevet US 2009/0194375 est dimensionnée en sorte de s'étendre bien au-dessus de l'axe de la roue du véhicule afin que la résultante des efforts que lui applique la roue soit horizontale. Cependant cette disposition représente l'inconvénient de ne pouvoir disposer la cale derrière la roue du véhicule lorsque cette dernière est associée à une bavette ou à une protection de roue. Or de telles particularités présentes sur une majorité de véhicules, empêchent la mise en place de la cale.

L'appui de la roue sur la cale est réalisé sur la tranche de cette dernière ce qui pose un problème. Lors du déchargement du véhicule, la roue exerce une pression de plusieurs dizaines de déca Newton sur la tranche de la cale. Dans de nombreux cas de calage, il est compliqué d'enlever la cale tant la pression est importante, et parfois nécessite que le chauffeur enlève la roue pour pouvoir se dégager. Or la pression va s'exercer sur une surface très réduite ce qui va conduire à encastrer la cale dans l'un des sillons de la bande de roulement du pneumatique. Il sera alors impossible de retirer la cale après déchargement du véhicule, essentiellement en raison du fait que le dégagement s'effectue par traction parallèlement à la roue.

Cette demande de brevet décrit aussi une variante au dispositif de calage. La cale selon cette seconde variante de réalisation, pour sa mise en place dans la position de calage, est d'abord relevée, ensuite amenée au-dessus de la crémaillère de blocage et enfin amenée en prise avec cette crémaillère par mouvement descendant.

Selon cette disposition, les roues du véhicule circulent nécessairement sur la crémaillère, laquelle, notamment au niveau des inter-dents, se charge alors pour cette raison en boues, graviers et autres éléments transportés par les sillons des bandes de roulement des véhicules. Or le comblement des inter-dents s'oppose au blocage de la cale en position ou pour le moins conduit à un mauvais blocage et peut être à l'origine d'un déverrouillage intempestif sous l'effet des efforts exercés par la roue. Comme on le comprend, une telle situation compromet la sécurité et doit être évitée.

Dans le cas où la hauteur de la cale est inférieure à la hauteur au-dessus du sol de l'axe de roue, le déchargement du véhicule ou un léger recul de celui-ci, peut conduire à l'impossibilité de retirer la cale de la crémaillère. Ceci tient au fait que cette cale ne peut être dégagée de la crémaillère que par mouvement ascendant et qu'elle est bloquée sur la crémaillère par la courbure de la roue. De plus le déport des guides de soutien de la cale accentue l'effet de blocage.

Dans le cas où la hauteur de cale est supérieure à la hauteur au-dessus du sol de l'axe de la roue, son utilisation pour des véhicules avec bavettes et protection de roues, s'avère impossible. D'autre part, l'effort produit par la roue lors d'un démarrage intempestif (environ 10 000 déca Newton) aura tendance à faire basculer la cale, ce qui nécessite un appui de base important et une reprise des efforts de basculement.

Enfin l'usage d'une telle cale suppose un positionnement précis du véhicule difficile à obtenir dans la pratique.

### Exposé de l'invention.

La présente invention vise à améliorer la fiabilité des dispositifs de calage manuel.

À cet effet le dispositif de calage manuel selon l'invention, comprenant un bâti formant un plan d'appui au sol, supportant au-dessus et à distance de ce plan, un rail rectiligne horizontal de guidage, sur lequel est montée en coulissement une tête support recevant une cale pouvant occuper une position effacée et une position de blocage distante de la précédente, se caractérise essentiellement en ce que :
- le rail de guidage présente une série de perçages verticaux cylindriques régulièrement espacés selon l'axe horizontal de coulissement de la tête,
- ladite tête est équipée d'un fourreau de guidage engagé en coulissement sur le rail de guidage,
- ledit fourreau est équipé d'au moins un perçage radial traversant, prévu pour venir, par coulissement de la tête, en correspondance axiale avec l'un des perçages du rail de guidage,
- la tête est équipée d'au moins un doigt de verrouillage mobile prévu pour être engagé dans l'alignement de perçage formé, en vue de son immobilisation en translation le long du rail de guidage, et en ce que

la cale est formée d'une tige rigide horizontale, engagée en coulissement dans un second fourreau porté par la tête au-dessus du premier fourreau, la cale et ce second fourreau s'étendant selon une direction transversale par rapport à celle du rail de guidage et ladite cale pouvant prendre une position effacée selon laquelle elle s'étend d'un côté du rail de guidage et une position de blocage selon laquelle, par une partie active, elle s'étend de l'autre côté du rail de guidage, ladite partie active étant prévue pour venir au contact de la bande de roulement de la roue correspondante du véhicule à immobiliser, et en ce que
et en ce que la tête est équipée d'au moins un doigt de verrouillage additionnel fixé à un actionneur électrique et le second fourreau ainsi que la cale sont dotés chacun d'un perçage radial et qu'en position de blocage de la cale, le perçage radial que comporte cette dernière est situé dans l'alignement axial du perçage radial que comporte le second fourreau de façon que par activation de l'actionneur, le doigt de verrouillage soit amené dans l'alignement de perçages ainsi formé et assure, dans cette position de verrouillage, le maintien de la cale en position de blocage.

Selon une autre caractéristique de l'invention, la hauteur de la cale au-dessus du sol est inférieure à la hauteur de l'axe de roues des véhicules de transport.

Selon une autre caractéristique de l'invention, le doigt de verrouillage est porté par un levier d'actionnement articulé à la tête support au-dessus du rail de guidage, la distance entre le doigt de verrouillage et l'axe d'articulation du levier étant inférieure à la distance entre ce doigt de verrouillage et l'extrémité libre du levier, ledit levier étant mobile entre une position de déverrouillage selon laquelle le doigt de verrouillage est dégagé des perçages du rail de guidage et une position de verrouillage selon laquelle ledit doigt de verrouillage est disposé dans un perçage du fourreau et dans un perçage du rail.

Selon une autre caractéristique de l'invention, la tête est équipée de deux doigts de verrouillage et le fourreau de guidage est doté de deux perçages traversants, écartés l'un de l'autre, prévus pour recevoir les deux doigts de verrouillage.

Selon une autre caractéristique de l'invention, la cale est cylindrique. Selon une autre caractéristique de l'invention, le rail horizontal est de section droite circulaire et la tête est équipée de moyens d'immobilisation en rotation, ces moyens étant dissociés du rail de guidage.

Une telle disposition évite que des efforts de torsion soient transmis au rail de guidage.

Selon une autre caractéristique de l'invention, les moyens d'immobilisation de la tête en rotation comprennent une jambe de force fixée à la tête à distance de l'axe géométrique longitudinal du premier fourreau et une semelle de glissement fixée au bâti, s'étendant parallèlement au rail de guidage, sur laquelle, la jambe de force, par son extrémité inférieure, vient en appui glissant.

Selon une autre caractéristique de l'invention, les moyens d'immobilisation en rotation comprennent de plus une première butée longiforme fixée au bâti et s'étendant parallèlement au rail de guidage et une seconde butée coopérante, fixée au premier fourreau, cette seconde butée étant en appui glissant contre la première butée.

Selon une autre caractéristique de l'invention, le dispositif est doté d'un moyen de détection de la position de blocage de la cale et de la position de verrouillage du levier.

Selon une autre caractéristique de l'invention, le moyen de détection est constitué par un premier élément de détection fixé à une poignée que possède la cale, et par un second élément de détection fixé au levier d'actionnement, les deux éléments de détection venant en regard l'un de l'autre lorsque la cale est en position de blocage et que le ou chaque doigt de verrouillage est en position de verrouillage dans le ou les perçages correspondants du rail de guidage.

La présente invention se rapporte également à une installation de quai de chargement comportant au moins un dispositif de calage selon l'invention.

### Avantages de l'invention.

Le dispositif de calage selon l'invention présente les avantages suivants :
- son bon fonctionnement n'est pas tributaire du degré de déformation de l'aire de stationnement, ni de l'état de propreté des pneumatiques du véhicule et de l'environnement,

- la forme cylindrique de la cale permet un appui uniforme sur le pneumatique,
- l'effort de poussée exercé par la roue sur la cale renforce le verrouillage des doigts dans le rail de guidage. Leur libération ne pose pas problème du fait de l'effet démultiplicateur créé par le levier d'actionnement. Le déverrouillage des doigts conduit à libérer toute pression de la roue sur la cale et cette dernière peut alors être librement actionnée vers sa position d'effacement,
- la cale en étant située plus bas que l'axe de la roue est toujours située en dessous de la protection de la roue et son faible encombrement permet de la loger entre la bavette et la roue,
- l'effort de basculement vers le bas induit sur la cale par la roue est repris par la jambe de force et transmis à la semelle de glissement,
- le débattement très important de la cale permet de prendre en charge pour l'immobilisation, un véhicule écarté de plus de 20 centimètres par rapport au calage, donc est efficace même dans le cas de véhicules très déportés.

### Bref exposé des figures et des dessins.

D'autres buts, caractéristiques et avantages de l'invention apparaîtront à la lecture de la description d'une forme préférée de réalisation, donnée à titre d'exemple non limitatif en se référant aux dessins annexés en lesquels :

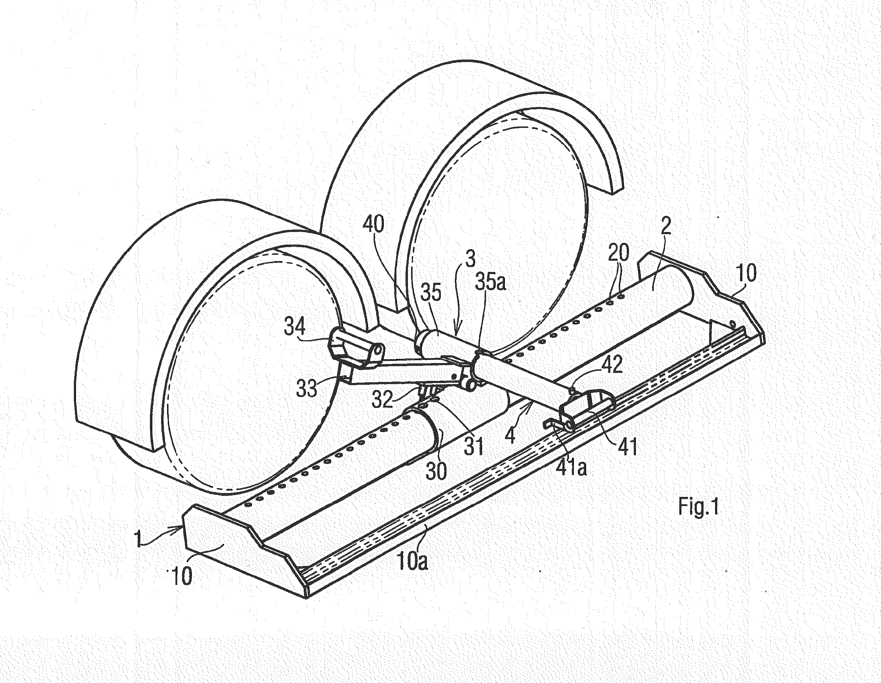

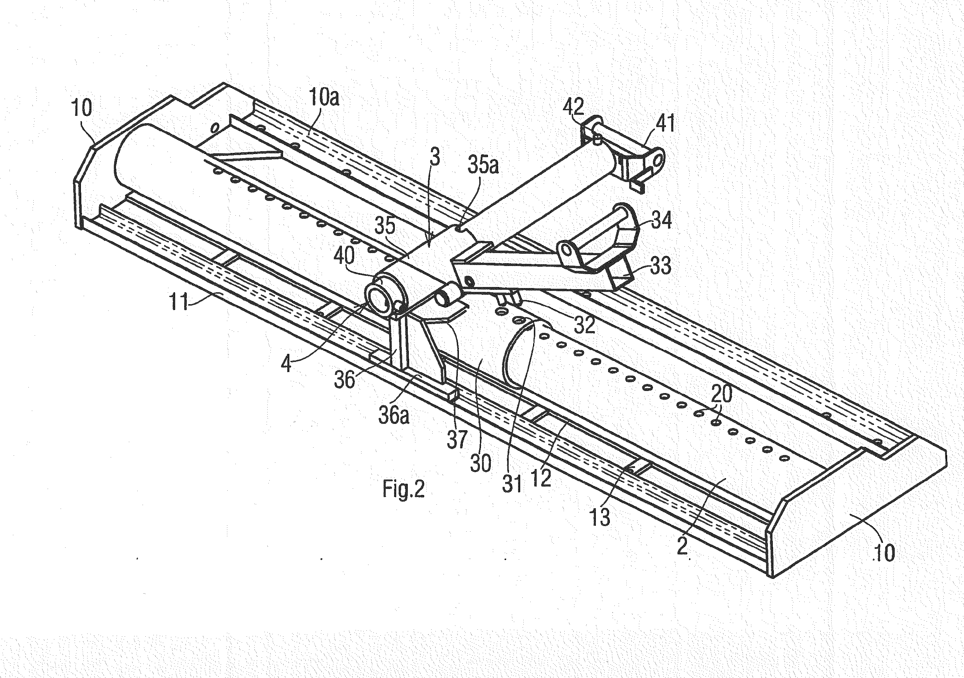

- les figures 1 et 2 sont des vues en perspective d'un dispositif selon l'invention, la cale étant en position effacée et la tête étant déverrouillée,
- la figure 3 est une vue en perspective du dispositif conforme à l'invention, la cale de blocage étant en position de blocage et la tête étant verrouillée sur le rail de guidage,

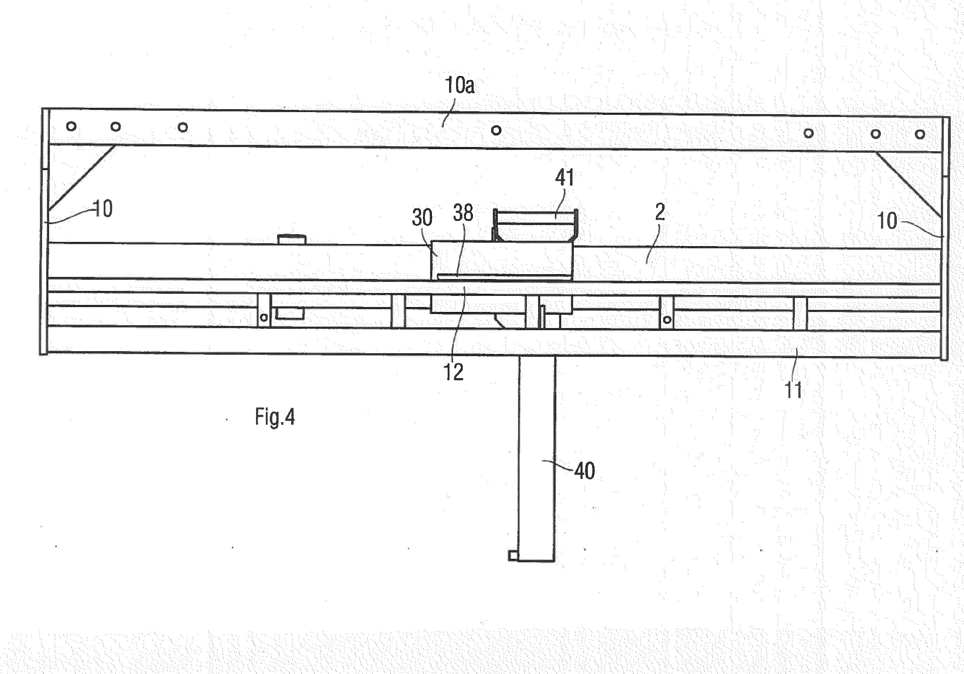

- la figure 4 est une vue de dessous du dispositif selon l'invention.
- les figures 5 et 6 sont des vues en perspective d'un dispositif selon une variante d'exécution non couverte par l'invention, la cale étant en position de blocage,
- la figure 7a est une vue de profil du dispositif selon les figures 5 et 6,

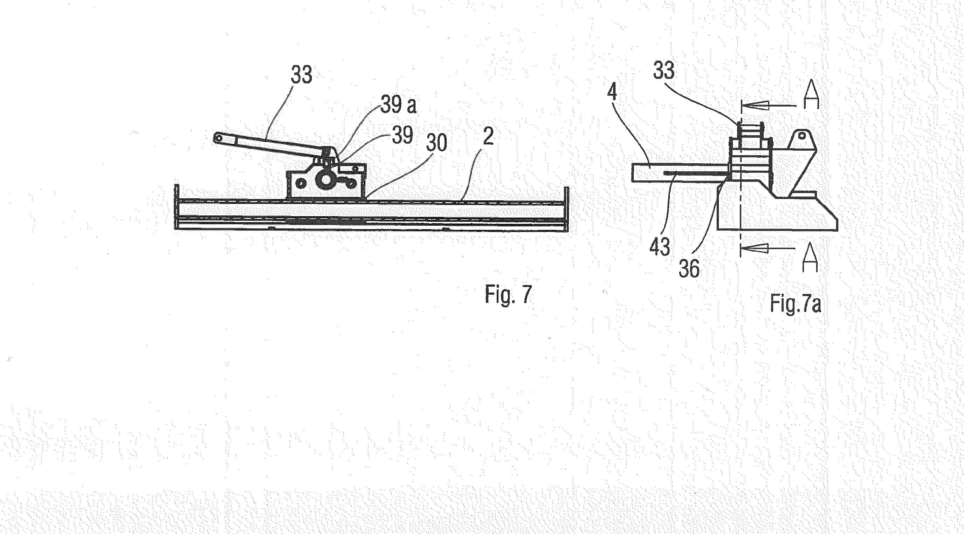

- la figure 7 est une vue en coupe du dispositif selon la ligne AA de la figure 7a,

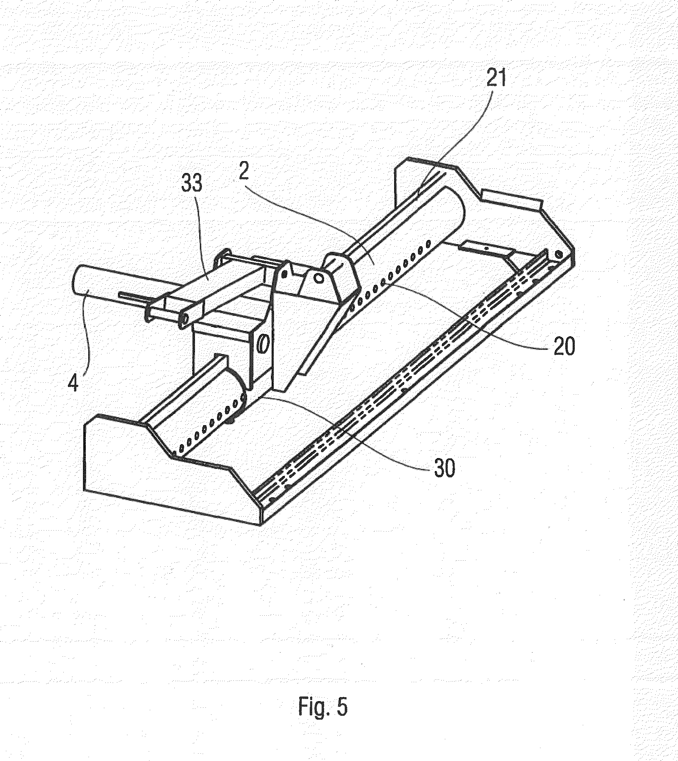

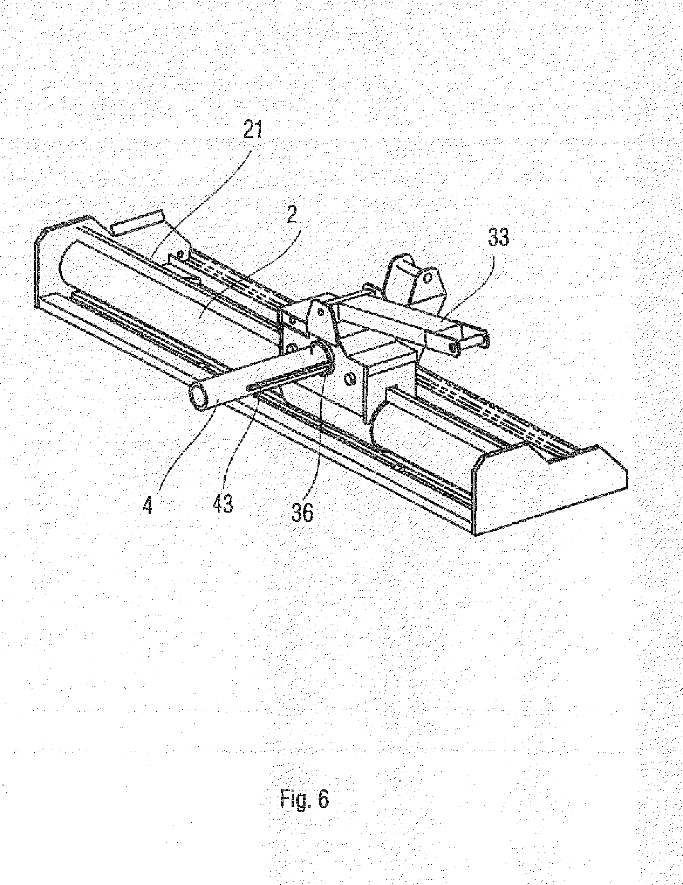

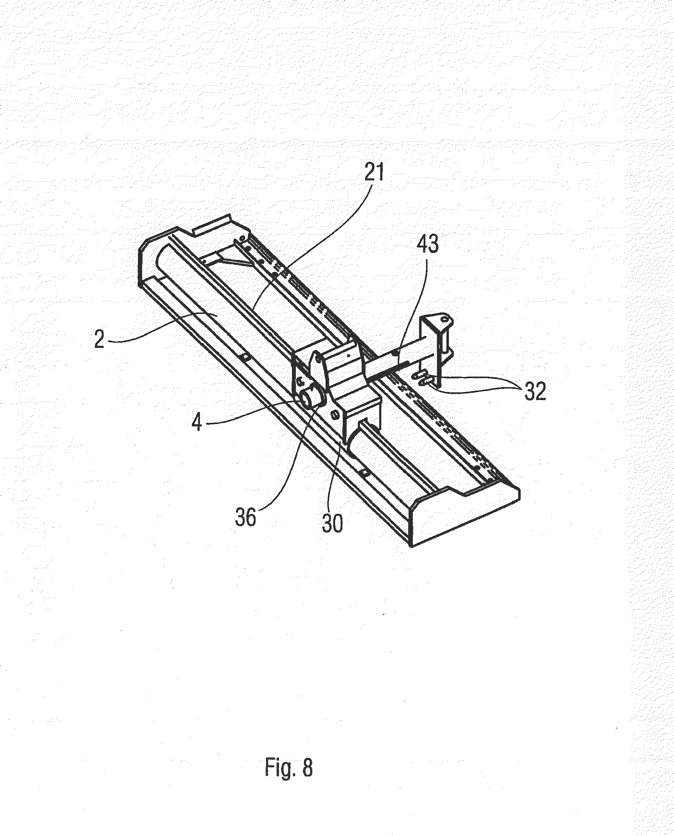

- la figure 8 est une vue en perspective du dispositif selon les figures 5 et 6, la cale étant en position effacée.

### Meilleure manière de réaliser l'invention.

Tel que représenté, le dispositif selon l'invention, de calage à quai de véhicule de transport de marchandises est prévu pour être ancré au sol en regard du quai et latéralement à l'aire de stationnement du véhicule face à ce quai.

Ce dispositif comprend un bâti 1 définissant un plan d'appui au sol, supportant au-dessus et à distance de ce plan, un rail rectiligne de guidage 2 horizontal sur lequel est montée en coulissement une tête support 3 recevant une cale 4 pouvant occuper alternativement une position effacée et une position de blocage distante de la précédente, selon laquelle, la cale 4 par une partie active 40 qu'elle présente, se situe au-dessus de l'aire de stationnement du véhicule et peut être amenée, par coulissement de la tête 3 sur le rail 2, contre la bande de roulement de la roue correspondante du véhicule en vue d'immobiliser ce dernier contre le quai.

Le bâti 1, prévu pour être fixé au sol par des vis d'ancrage, est formé de deux flancs métalliques verticaux 10, parallèles, distants l'un de l'autre, comprenant chacun une face inférieure horizontale d'appui au sol. La face inférieure de l'un des flancs verticaux 10 et la face inférieure de l'autre flanc sont coplanaires et définissent un plan géométrique d'appui au sol. Ces deux flancs sont réunis l'un à l'autre par une entretoise métallique 10a prévue pour prendre appui sur le sol. Cette entretoise est formée par un profilé de section droite en U. Elle est dotée de perçages traversants prévus pour recevoir des vis d'ancrage au sol.

Au-dessus et à distance de ce plan, le châssis 1 tel que défini, reçoit le rail de guidage 2. Ce rail de guidage, métallique, est fixé par ses extrémités aux deux flancs verticaux 10, de préférence par soudage.

En partie supérieure, le rail 2 présente une série de perçages verticaux 20 cylindriques. Ces perçages sont régulièrement espacés selon un axe géométrique parallèle à l'axe longitudinal du rail 2. Dans la forme pratique de réalisation, le rail de guidage 2 est formé à partir d'un profilé tubulaire du commerce de section droite circulaire. Les perçages 20 sont formés dans le rail 20 en sorte de traverser de part en part l'épaisseur de la paroi tubulaire du rail 2.

La tête 3 est équipée d'un fourreau de guidage 30 métallique, présentant un alésage traversant cylindrique par lequel elle est engagée en coulissement sur le rail de guidage 2.

Le fourreau de guidage 30, en regard de la ligne de perçages 20 formée dans le rail de guidage, présente au moins un perçage traversant 31, lequel, par coulissement de la tête 3 sur le rail 2, est amené en regard d'un perçage 20 du rail. En combinaison avec cette caractéristique, la tête est équipée d'au moins un doigt métallique de verrouillage 32 mobile. Ce doigt est prévu pour être engagé dans l'alignement de perçage 20 31 formé, en vue d'immobiliser la tête 3 en translation le long du rail 2.

Dans la forme préférée de réalisation, le doigt de verrouillage 32 est porté par un levier d'actionnement 33 articulé à la tête, au-dessus du rail de guidage 2. Le levier 33 est articulé à la tête selon un axe horizontal perpendiculaire à l'axe longitudinal du rail de guidage 2. Afin d'en faciliter la manoeuvre en pivotement, le levier est doté en extrémité libre d'une poignée de manoeuvre 34. Le doigt de verrouillage 32 forme saillie sous le levier 33.

Pour obtenir un effet démultiplicateur de l'effort à exercer sur la poignée 34 du levier 33 en vue de dégager les doigts de verrouillage des perçages correspondants du rail, la distance entre l'axe d'articulation du levier et le ou chaque doigt 32 est inférieure à la distance entre le ou chaque doigt 32 et la poignée 34 et ce de préférence dans un rapport de 10.

De préférence, la tête 3 est dotée de deux doigts de verrouillage 32 portés par le levier 33. Selon cette forme de réalisation, le fourreau de guidage 30 est doté de deux perçages traversants 31 écartés l'un de l'autre, prévus pour recevoir les deux doigts de verrouillage 32. La valeur de l'entraxe entre ces deux perçages sera égale à la valeur de l'entraxe entre deux perçages consécutifs 20 du rail de guidage 2.

Par pivotement du levier de verrouillage 33 vers le bas, le ou chaque doigt de verrouillage 32 est engagé dans l'alignement de perçage correspondant afin d'immobiliser la tête 3 en translation le long du rail 2 dans une position correspondant à l'appui de la partie active 40 de cale 4 contre la bande de roulement de la roue du véhicule à immobiliser. Par pivotement du levier 33 vers le haut, le ou chaque doigt de verrouillage 32 est dégagé de l'alignement de perçages 20, 31 correspondant, et la tête 3, ainsi libérée, peut librement coulisser le long du rail 2.

La cale 4 est formée d'une tige rigide métallique, de section droite circulaire. Cette cale 4 est horizontale et est engagée en coulissement dans un second fourreau métallique 35 porté par la tête 3 au-dessus du premier fourreau 30. Comme on peut le voir, la cale 4 et le second fourreau 35 par son axe longitudinal, s'étendent selon une direction transversale par rapport à celle du rail de guidage 2 et plus particulièrement selon une direction perpendiculaire.

Ce second fourreau 35 est fixé, par exemple par soudage, au premier fourreau. Ce second fourreau présente un alésage traversant cylindrique dans lequel la cale est engagée en coulissement.

La cale 4 par coulissement dans le second fourreau 35 peut être disposée soit selon une position effacée selon laquelle elle s'étend d'un côté du rail de guidage 2 soit selon une position de blocage selon laquelle, par sa partie active 40, elle s'étend de l'autre côté du rail de guidage 2 et comme dit précédemment, au-dessus de l'aire de stationnement du véhicule.

Afin de faciliter sa manoeuvre, entre la position effacée et la position active et inversement, la cale 4, suivant son extrémité opposée à la partie active 40, présente une poignée de manoeuvre 41.

En position déployée, la partie active 40 de la cale 4 s'oppose à tout mouvement vers l'avant du véhicule à savoir à tout mouvement visant à écarter l'arrière du véhicule du quai de transbordement. Elle est donc susceptible de recevoir à écartement du fourreau 35, un effort de poussée radial, oblique, dirigé tant vers le bas que vers l'avant, de nature à engendrer le pivotement du fourreau 30 et de la cale 4. Or il est nécessaire que la cale 4 en présence d'un tel effort de poussée demeure en position horizontale pour remplir sa fonction. Pour cette raison, la tête 3 est équipée d'un moyen d'immobilisation en rotation autour du rail de guidage 2, ce moyen étant dissocié dudit rail afin qu'aucun moment de torsion ne soit transmis à ce dernier.

Selon une forme pratique de réalisation, le moyen d'immobilisation de la tête en rotation comprend une jambe de force 36 fixée à la tête 3 à distance de l'axe géométrique longitudinal du fourreau 30 et une semelle de glissement 11 fixée au bâti 1 sur laquelle, la jambe de force par son extrémité inférieure, vient en appui glissant. Comme on peut le voir, cette semelle de glissement 11 est fixée par ses extrémités aux deux flancs verticaux 10 du bâti. Cette semelle de glissement 11 est prévue pour prendre appui sur le sol et à cet effet est dotée selon le plan d'appui défini plus avant, d'une surface plane horizontale. Cette semelle 11 s'étend parallèlement au rail de guidage 2 du côté de ce dernier accueillant la partie active 40 de la cale 4 lorsque cette dernière est en position de blocage.

Selon la forme pratique de réalisation la jambe de force 36 est fixée, par exemple par soudage, par son extrémité supérieure, au fourreau 35. De plus cette jambe de force 36 est fixée par l'intermédiaire d'un ou plusieurs éléments de renfort 37 au fourreau 30. En extrémité inférieure, la jambe de force 36 présente une forme de coulisseau 36a prenant appui glissant sur la semelle de glissement 11.

Toujours selon la forme pratique de réalisation, la semelle de glissement 11 est formée par un profilé métallique du commerce de section droite en U. Ce profilé est disposé en sorte que ses deux ailes latérales soient verticales et tournées vers le haut. La forme de coulisseau 36a est disposée dans le logement que définit la semelle 11, en appui sur la face intrados de l'aile basale de cette dernière.

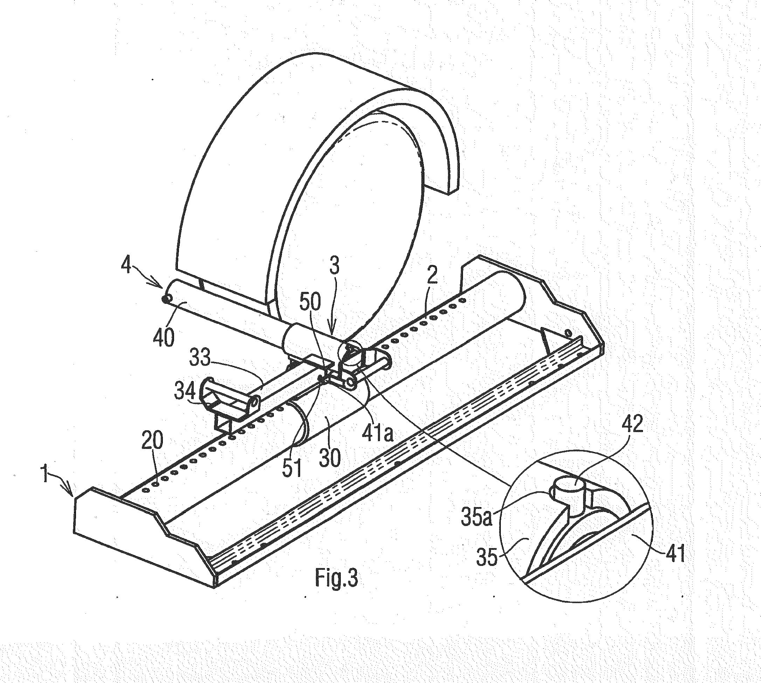

Les dispositions telles que décrites s'opposent, en considérant la figure 3, au basculement de la tête dans le sens trigonométrique. Pour s'opposer au basculement de la tête 3 dans le sens opposé, est prévu un second moyen d'immobilisation en rotation. Ce second moyen comprend une première butée longiforme 12, parallèle au rail de guidage 2, fixée au bâti 1 et plus particulièrement aux flancs 10 de ce dernier et d'une seconde butée 38 coopérante fixée au premier fourreau 30, cette seconde butée 38 étant en appui glissant contre la première butée 12. Ce second moyen est également dissocié du rail de guidage 2. En variante, la seconde butée 38 est constituée par au moins un galet solidaire de la tête 3 et plus particulièrement du fourreau 30.

La première butée 12 est formée par un profilé métallique de section droite rectangulaire. Cette première butée est fixée, par exemple par soudage, par ses extrémités aux flancs 10 du bâti. Par des éléments de renforts 13 régulièrement espacés, cette première butée est fixée à la semelle 11.

La seconde butée 38, métallique, est fixée, par exemple par soudage au fourreau 30 et forme une saillie radiale sur la face externe de ce dernier.

Avantageusement le dispositif est doté d'un moyen de détection de la position de blocage de la cale et de la position de verrouillage des doigts de verrouillage et du levier d'actionnement. Ce moyen, selon une forme pratique de réalisation, est constitué par un premier élément de détection 50 fixé à la poignée 41, et plus particulièrement à une patte 41 a portée par cette dernière, et par un second élément de détection 51 fixé au levier 33. Ces éléments de détection, connus en soi, seront du type inductif.

Pour la détection de la position de blocage de la cale 4, et la détection de la position de verrouillage des doigts, il est nécessaire d'une part, que le levier 33 soit en position de verrouillage et d'autre part, que la cale et la poignée 41 soient dans une position angulaire déterminée faute de quoi les éléments de détection seront décalés angulairement l'un de l'autre et ne pourront délivrer une information relative à un état correct déverrouillage. Ainsi, la cale 4 et le fourreau 30 possèdent un moyen d'indexation constitué par un ergot 42 formant saillie radiale sur la surface cylindrique de la cale 4 et par une encoche 35a pratiquée en extrémité du fourreau 30, prévue pour accueillir l'ergot 42 lorsque la cale est en position de blocage. Ainsi la position de blocage est également matérialisée par la pénétration de l'ergot 42 dans l'encoche 35a. La position de verrouillage du levier 33 ne pourra être détectée que lorsque l'élément de détection porté par ce dernier, sera en regard de l'élément de détection porté par la patte 41 a de la poignée. Il y a lieu de noter que l'axe d'articulation du levier l'axe longitudinal du second fourreau et de la cale 41 n'étant pas confondus, seule la position de blocage de la cale, matérialisée par l'engagement de l'ergot 42 dans l'encoche 35a et la position de verrouillage du levier 33 remplissent la condition alignement des deux éléments de détection.

Ce moyen de détection est apte, lorsque la cale 4 est en position de blocage et les doigts 32 en position de verrouillage dans les perçages 20 et 31, à renvoyer un signal d'autorisation permettant l'ouverture des portes du quai de transbordement et commandant l'activation de feux de signalisation.

La tête du dispositif est équipée d'au moins un doigt de verrouillage additionnel fixé à un actionneur électrique et le second fourreau ainsi que la cale sont dotés chacun d'un perçage radial. En position de blocage de la cale, le perçage radial que comporte cette dernière est situé dans l'alignement axial du perçage radial que comporte le second fourreau. Par activation de l'actionneur, le doigt de verrouillage est amené dans l'alignement de perçage ainsi formé et assure, dans cette position de verrouillage, le maintien de la cale en position de blocage. Il va de soi que tout autre moyen de verrouillage pourra être utilisé pour maintenir la cale en position de blocage. Ainsi l'électro aimant pourra agir sur un ergot de la cale.

En figures 5 à 8 est représenté un dispositif de calage manuel selon une variante d'exécution. Selon cette variante, le doigt ou chaque doigt de verrouillage 32 n'est plus porté par un levier 33 mais par la cale 4 elle-même. Dans cette configuration, les perçages 20 du rail 2 et du fourreau 30 prévus pour accueillir le ou chaque doigt de verrouillage 32, sont formés latéralement dans ledit rail 2 et ledit fourreau 30. L'axe longitudinal de chaque perçage est horizontal et le ou chaque doigt de verrouillage 32 occupe une position horizontale, perpendiculaire à l'axe longitudinal du rail 2. Le ou chaque doigt de verrouillage 32, par une de ses extrémités est fixé rigidement à une platine verticale que possède la poignée 41, cette platine s'étendant vers le bas depuis la poignée. Selon cette disposition le verrouillage de la tête 3 en position le long du rail 2 résulte du déplacement de la cale 4 vers sa position de blocage et de l'introduction du ou de chaque doigt de verrouillage dans un perçage du fourreau 30 et dans un perçage 20 du rail. Préférentiellement, la cale est équipée de deux doigts de verrouillage.

La cale 4 est dotée de moyens d'immobilisation en rotation dans le fourreau 35. Ces moyens sont constitués par un guide longitudinal 43 fixé à la cale4 et s'étendant sur la surface externe de cette dernière le long d'une de ses génératrices, et par une rainure longitudinale 36 creusée dans le fourreau 35, pour recevoir en coulissement le guide longitudinal 43.

Selon la seconde forme de réalisation, du dispositif le rail de guidage 2 est pourvu d'un guide longitudinal 21, et la tête 3 est équipée d'organes de roulement 21 a prenant appui sur le guide longitudinal 21.

Avantageusement, ces organes de roulement 21 a sont dotés chacun d'une gorge et par le fond de la gorge prennent appui sur le guide longitudinal 21. Une telle disposition, outre de faciliter le déplacement de la tête 3 le long du rail 2, a pour effet de contribuer à l'immobilisation en rotation de cette dernière autour du rail 2. On note que dans cette variante, le dispositif de calage n'est plus équipé de la jambe de force 36 etdu coulisseau 36a associé.

Avantageusement, la tête 3 du dispositif selon cette variante de réalisation, est équipée d'un moyen de détection de la position de blocage de la cale 4, connu en soi.

De préférence la tête 3 du dispositif selon la deuxième forme de réalisation, est équipée d'au moins un doigt de verrouillage additionnel 39 fixé à un actionneur électrique 39a et le second fourreau 35 ainsi que la cale 4 sont dotés chacun d'un perçage radial. En position de blocage de la cale 4, le perçage radial que comporte cette dernière est situé dans l'alignement axial du perçage radial que comporte le second fourreau 35. Par activation de l'actionneur 39a, le doigt de verrouillage 39 est amené dans l'alignement de perçage ainsi formé et assure, dans cette position de verrouillage, le maintien de la cale 4 en position de blocage. Il va de soi que tout autre moyen de verrouillage pourra être utilisé pour maintenir la cale 4 en position de blocage. Ainsi l'électro aimant pourra agir sur un ergot de la cale.

Le dispositif pourra aussi être équipé d'un détecteur de présence apte à détecter la présence d'un véhicule par détection de la roue de ce dernier. Ce détecteur sera du type infrarouge. En l'absence de véhicule dans le dispositif un signal de défaut sera émis. Un signal de défaut est également émis lorsque la cale n'est pas en position de blocage.

L'installation de quai selon l'invention est équipée d'au moins un dispositif selon l'invention. Le quai comporte un moyen d'accès tel que porte pouvant occuper une première position, par exemple une position d'ouverture, permettant le transfèrement des marchandises entre le camion et un magasin de stockage le véhicule de transport de marchandises et une seconde position, par exemple une position de fermeture interdisant ce transfèrement. Cette installation comporte un détecteur de positions, connu en soi apte à détecter au moins la première position du moyen d'accès et émettre en retour un signal électrique. L'installation comporte de plus une unité de commande apte à activer l'actionneur 39a dans le sens du verrouillage du doigt 39, à partir du signal délivré par le détecteur de positions.

Ainsi, s'agissant d'un quai avec porte, la détection de l'état ouvert de cette porte se traduira par l'activation de l'actionneur afin que le doigt 39 soit amené dans sa position de verrouillage. L'actionneur 39a sera maintenu dans son état actif tant que la porte sera détectée ouverte. Une telle disposition en s'opposant au départ du camion, tant que la porte du quai demeure ouverte renforce la sécurité.

La sécurité se trouve également renforcée par le fait que le détecteur infrarouge de présence de véhicule dans le dispositif et le détecteur de la position de blocage de la cale sont connectés électriquement à l'unité de commande qui peut alors en présence de signaux de défaut émis par ces deux détecteurs maintenir le moyen d'accès dans sa seconde position c'est à dire s'agissant d'une porte, dans une position de fermeture.

Il va de soi que la présente invention peut recevoir tous aménagements et variantes du domaine des équivalents techniques sans pour autant sortir du cadre du présent brevet tel que défini par les revendications ci-après.

## Revendications

1. Dispositif de calage manuel, comprenant un bâti (1) formant un plan d'appui au sol, supportant au-dessus et à distance de ce plan, un rail rectiligne horizontal de guidage (2), sur lequel est monté en coulissement une tête support (3) équipée d'une cale (4) pouvant occuper une position effacée et une position de blocage distante de la précédente, le rail (2) présentant une série de perçages verticaux cylindriques (20) régulièrement espacés selon l'axe horizontal de coulissement de la tête (3), ladite tête étant équipée d'un fourreau (30) de guidage engagé en coulissement sur le rail de guidage (2), ledit fourreau (30) étant équipé d'au moins un perçage radial traversant (31) prévu pour venir, par coulissement de la tête (3), en correspondance axiale avec l'un des perçages (20) du rail de guidage (2) et ladite tête (3) étant équipée d'au moins un doigt de verrouillage mobile (32) prévu pour être engagé dans l'alignement de perçage (20, 31) formé, en vue de son immobilisation en translation le long du rail de guidage (2), **caractérisé en ce que** la cale (4) est formée d'une tige rigide horizontale, engagée en coulissement dans un second fourreau (35) porté par la tête (3) au-dessus du premier fourreau, la cale (4) et ce second fourreau (35) s'étendant selon une direction transversale par rapport à celle du rail de guidage (2) et ladite cale (4) pouvant prendre une position effacée selon laquelle elle s'étend d'un côté du rail de guidage et une position de blocage selon laquelle, par une partie active (40), elle s'étend de l'autre côté du rail de guidage, ladite partie active (40) étant prévue pour venir au contact de la bande de roulement de la roue correspondante du véhicule à immobiliser et **en ce que** la tête (3) est équipée d'au moins un doigt de verrouillage additionnel (39) fixé à un actionneur électrique (39a) et le second fourreau (35) ainsi que la cale (4) sont dotés chacun d'un perçage radial et qu'en position de blocage de la cale (4), le perçage radial que comporte cette dernière est situé dans l'alignement axial du perçage radial que comporte le second fourreau (35) de façon que par activation de l'actionneur (39a), le doigt de verrouillage (39) soit amené dans l'alignement de perçages ainsi formé et assure, dans cette position de verrouillage, le maintien de la cale (4) en position de blocage.

2. Dispositif selon la revendication précédente, **caractérisé en ce que** le doigt (32) est porté par un levier (33) articulé à la tête (3) au-dessus du rail de guidage (2).

3. Dispositif selon la revendication précédente, **caractérisé en ce que** le doigt de verrouillage (32) forme saillie sous le levier (33).

4. Dispositif selon l'une quelconque des revendications précédentes, **caractérisé en ce que** la tête (3) est équipée de deux doigts de verrouillage (32) et que le fourreau de guidage (30) est doté de deux perçages traversants (31) écartés l'un de l'autre, prévus pour recevoir les deux doigts de verrouillage (32).

5. Dispositif selon la revendication 1, **caractérisé en ce que** le doigt ou chaque doigt de verrouillage (32) est porté par la cale (4) est engagé en position de blocage de la cale, dans un perçage du fourreau (30) et dans un perçage (20) du rail (2).

6. Dispositif selon l'une quelconque des revendications précédentes, **caractérisé en ce que** le rail horizontal (2) est de section droite circulaire et la tête (3) est équipée de moyens d'immobilisation en rotation, ces moyens étant dissociés du rail de guidage (2).

7. Dispositif selon la revendication précédente, **caractérisé en ce que** l'un des moyens d'immobilisation de la tête (3) en rotation comprend une jambe de force (36) fixée à la tête (3) à distance de l'axe géométrique longitudinal du fourreau (30) et une semelle de glissement (11) portée par le bâti s'étendant parallèlement au rail de guidage (2) sur laquelle la jambe de force (36) par son extrémité inférieure, vient en appui glissant.

8. Dispositif selon la revendication 7, **caractérisé en ce que** l'autre moyen d'immobilisation en rotation comprend une première butée longiforme (12) fixée au bâti (1) et s'étendant parallèlement au rail de guidage (2) et une seconde butée (38) fixée au premier fourreau (30), cette seconde butée (38) étant en appui glissant contre la première butée (12).

9. Dispositif selon l'une quelconque des revendications 1 à 4, 6 à 8, **caractérisé en ce que** la cale (4) et le fourreau (30) possèdent un moyen d'indexation constitué par un ergot (42) formant saillie radiale sur la surface cylindrique de la cale (4) et par une encoche (35a) pratiquée en extrémité du fourreau (30), prévue pour accueillir l'ergot (42) lorsque la cale (4) est en position de blocage.

10. Dispositif selon l'une quelconque des revendications précédentes, **caractérisé en ce qu'**il est doté d'un moyen de détection de la position de verrouillage de la cale (4) et de détection de la position de verrouillage du ou de chaque doigt de verrouillage.

11. Dispositif selon les revendications 2 et 10 prises ensemble, **caractérisé en ce que** le moyen de détection est constitué par un premier élément de détection fixé à une poignée (41) que possède la cale (4), et par un second élément de détection fixé au levier d'actionnement (33), les deux éléments de détection venant en regard l'un de l'autre lorsque la cale (4) est en position de blocage et lorsque le ou chaque doigt de verrouillage est en position de verrouillage, dans le ou les perçages correspondants (20) du rail de guidage.

12. Installation de quai de chargement, **caractérisée en ce qu'**elle est équipée d'un dispositif selon l'une des revendications précédentes.

13. Installation selon la revendication précédente, comportant un quai avec un moyen d'accès, pouvant occuper une première position permettant le transfèrement des marchandises entre un magasin et le véhicule de transport, et une seconde position interdisant ce transfèrement, **caractérisée en ce qu'**elle comporte une unité de commande, apte à activer l'actionneur (39a) dans le sens du verrouillage du doigt (39), à partir d'une information délivrée par un détecteur de positions associé au moyen d'accès, afin d'interdire le déverrouillage du doigt (39) tant que ledit moyen d'accès est dans sa première position.

## Patentansprüche

1. Vorrichtung zum manuellen Verkeilen, umfassend ein Gestell (1), das eine Bodenauflageebene ausbildet, das über und mit Abstand zu dieser Ebene eine geradlinige horizontale Führungsschiene (2) stützt, an der ein Stützkopf (3) gleitend montiert ist, der mit einem Keil (4) ausgerüstet ist, der eine zurückgezogene Position und eine Blockierposition fern von der vorherigen einnehmen kann, wobei die Schiene (2) eine Reihe von zylindrischen vertikalen Bohrungen (20) vorweist, die entlang der horizontalen Gleitachse des Kopfes (3) regelmäßig beabstandet sind, wobei der Kopf mit einer Führungsscheide (30) ausgerüstet ist, die an der Führungsschiene (2) gleitend in Eingriff steht, wobei die Scheide (30) mit mindestens einer radialen Durchgangsbohrung (31) ausgerüstet ist, die dazu vorgesehen ist, durch Gleiten des Kopfes (3) in axiale Entsprechung mit einer der Bohrungen (20) der Führungsschiene (2) zu kommen, und der Kopf (3) mit mindestens einem bewegbaren Verriegelungszapfen (32) ausgerüstet ist, der dazu vorgesehen ist, in Hinsicht auf seine Verschiebungssicherung entlang der Führungsschiene (2) in der ausgebildeten Bohrungsausrichtung (20, 31) in Eingriff zu stehen, **dadurch gekennzeichnet, dass** der Keil (4) aus einer horizontalen starren Stange ausgebildet ist, die in einer zweiten Scheide (35) gleitend in Eingriff steht, die durch den Kopf (3) über der ersten Scheide getragen wird, wobei sich der Keil (4) und die zweite Scheide (35) entlang einer Querrichtung relativ zu derjenigen der Führungsschiene (2) erstrecken und der Keil (4) eine zurückgezogene Position, in der er sich von einer Seite der Führungsseite erstreckt, und eine Blockierposition annehmen kann, in der er sich durch ein Wirkteil (40) von der anderen Seite der Führungsschiene erstreckt, wobei das Wirkteil (40) dazu vorgesehen ist, mit der Lauffläche des entsprechenden Rades des zu sichernden Fahrzeugs in Berührung zu kommen, **und dadurch, dass** der Kopf (3) mit mindestens einem zusätzlichen Verriegelungszapfen (39) ausgerüstet ist, der an einem elektrischen Betätigungsorgan (39a) fixiert ist, und die zweite Scheide (35) sowie der Keil (4) jeweils mit einer radialen Bohrung versehen sind, und dass in der Blockierposition des Keils (4) die radiale Bohrung, die dieser letztere aufweist, in der axialen Ausrichtung der radialen Bohrung gelegen ist, die von der zweiten Scheide (35) aufgewiesen ist, sodass durch eine Aktivierung des Betätigungsorgans (39a) der Verriegelungszapfen (39) in die so ausgebildete Ausrichtung von Bohrungen bringt, und in dieser Verriegelungsposition das Halten des Keils (4) in der Blockierposition gewährleistet.

2. Vorrichtung nach dem vorstehenden Anspruch, **dadurch gekennzeichnet, dass** der Zapfen (32) durch einen Hebel (33) getragen wird, der an dem Kopf (3) über der Führungsschiene (2) gelenkig angebracht ist.

3. Vorrichtung nach dem vorstehenden Anspruch, **dadurch gekennzeichnet, dass** der Verriegelungszapfen (32) unter dem Hebel (33) einen Vorsprung ausbildet.

4. Vorrichtung nach einem der vorstehenden Ansprüche, **dadurch gekennzeichnet, dass** der Kopf (3) mit zwei Verriegelungszapfen (32) ausgerüstet ist, und dass die Führungsscheide (30) mit zwei Durchgangsbohrungen (31) versehen ist, die voneinander entfernt sind, die dazu vorgesehen sind, die zwei Verriegelungszapfen (32) aufzunehmen.

5. Vorrichtung nach Anspruch 1, **dadurch gekennzeichnet, dass** der Verriegelungszapfen oder jeder Verriegelungszapfen (32), der durch den Keil (4) getragen wird, in der Blockierposition des Keils in einer Bohrung der Scheide (30) und in einer Bohrung (20) der Schiene (2) in Eingriff steht.

6. Vorrichtung nach einem der vorstehenden Ansprüche,
**dadurch gekennzeichnet, dass** die horizontale Schiene (2) einen kreisförmigen Querschnitt hat und der Kopf (3) mit Drehsicherungsmitteln ausgerüstet ist, wobei diese Mittel von der Führungsschiene (2) getrennt sind.

7. Vorrichtung nach dem vorstehenden Anspruch, **dadurch gekennzeichnet, dass** eines der Drehsicherungsmittel des Kopfes (3) eine Strebe (36), die an dem Kopf (3) mit Abstand zu der geometrischen Längsachse der Scheide (30) fixiert ist, und eine Gleitgrundplatte (11) umfasst, die durch das Gestell getragen wird, die sich parallel zu der Führungsschiene (2) erstreckt, auf der die Strebe (36) durch ihr unteres Ende gleitend in Auflage kommt.

8. Vorrichtung nach Anspruch 7, **dadurch gekennzeichnet, dass** das andere Drehsicherungsmittel einen ersten länglichen Anschlag (12), der an dem Gestell (1) fixiert ist und sich parallel zu der Führungsschiene (2) erstreckt, und einen zweiten Anschlag (38) umfasst, der an der ersten Scheide (30) fixiert ist, wobei dieser zweite Anschlag (38) gegen den ersten Anschlag (12) gleitend aufliegt.

9. Vorrichtung nach einem der vorstehenden Ansprüche 1 bis 4, 6 bis 8,
**dadurch gekennzeichnet, dass** der Keil (4) und die Scheide (30) ein Indexierungsmittel besitzen, das aus einem Nocken (42), der auf der zylindrischen Oberfläche des Keils (4) einen radialen Vorsprung ausbildet, und aus einer Nut (35a) besteht, die an einem Ende der Scheide (30) ausgeführt ist, die dazu vorgesehen ist, den Nocken (42) zu empfangen, wenn der Keil (4) in der Blockierposition ist.

10. Vorrichtung nach einem der vorstehenden Ansprüche, **dadurch gekennzeichnet, dass** sie mit einem Mittel zum Erfassen der Verriegelungsposition des Keils (4) und zum Erfassen der Verriegelungsposition des oder der Verriegelungszapfen versehen ist.

11. Vorrichtung nach den Ansprüchen 2 und 10 zusammengenommen,
**dadurch gekennzeichnet, dass** das Erfassungsmittel aus einem ersten Erfassungselement, das an einem Griff (41) fixiert ist, den der Keil (4) besitzt, und aus einem zweiten Erfassungselement besteht, das an dem Betätigungshebel (33) fixiert ist, wobei die zwei Erfassungsmittel einander gegenüberliegen, wenn der Keil (4) in der Blockierposition ist und wenn der oder jeder Verriegelungsstift in der oder den entsprechenden Bohrungen (20) der Führungsschiene in der Verriegelungsposition ist.

12. Laderampenanlage, **dadurch gekennzeichnet, dass** sie mit einer Vorrichtung nach einem der vorstehenden Ansprüche ausgerüstet ist.

13. Anlage nach dem vorstehenden Anspruch, die eine Rampe mit einem Zugangsmittel aufweist, das eine erste Position, die die Überführung von Ware zwischen einem Lager und dem Transportfahrzeug ermöglicht, und eine zweite Position einnehmen kann, die diese Überführung unterbindet, **dadurch gekennzeichnet, dass** sie eine Steuereinheit aufweist, die geeignet ist, um das Betätigungsorgan (39a) in die Richtung der Verriegelung des Zapfens (39) ausgehend von einer Information zu aktivieren, die durch eine Positionserfassungseinrichtung geliefert wird, die mit dem Zugangsmittel verknüpft ist, um die Entriegelung der Zapfens (39) zu verhindern, solange das Zugangsmittel in seiner ersten Position ist.

## Claims

1. A manual chocking device, comprising a frame (1) forming a surface bearing on the ground, supporting above and away from this surface a horizontal rectilinear guide rail (2), on which is mounted slidably a support head (3) equipped with a chock (4) that can occupy a retracted position and a locked position away from the retracted position, the rail (2) having a series of cylindrical vertical holes (20) regularly spaced along the horizontal sliding axis of the head (3), said head being equipped with a guide sheath (30) slidably inserted onto the guide rail (2), said sheath (30) being equipped with at least one radial through-hole (31) intended to line up axially, by sliding of the head (3), with one of the holes (20) of the guide rail (2), and said head (3) being equipped with at least one movable locking pin (32) intended to be inserted into the alignment of holes (20, 31) formed, so that it can be translatably immobilized along the guide rail (2), **characterized in that** the chock (4) is formed of a rigid horizontal rod, slidably inserted into a second sheath (35) borne by the head (3) above the first sheath, the chock (4) and this second sheath (35) extending in a transverse direction with respect to that of the guide rail (2) and said chock (4) being able to take a retracted position, according to which it extends on one side of the guide rail, and a locked position according to which it extends, by an active portion (40), on the other side of the guide rail, said active portion (40) being intended to come into contact with the tread surface of the corresponding wheel of the vehicle to be immobilized, and **in that** the head (3) is equipped with at least one additional locking pin (39) attached to an electric actuator (39a) and the second sheath (35) and the chock (4) each have a radial hole, and in the locked position of the chock (4), the radial hole that the chock includes is axially aligned with the radial hole that the second sheath (35) includes, such that, by activating the actuator (39a), the locking pin (39) is brought into the alignment of holes thus formed and, in this locking position, maintains the chock (4) in the locked position.

2. The device according to the preceding claim, **characterized in that** the pin (32) is borne by a lever (33) hingedly connected to the head (3) above the guide rail (2).

3. The device according to the preceding claim, **characterized in that** the locking pin (32) forms a protrusion under the lever (33).

4. The device according to any one of the preceding claims, **characterized in that** the head (3) is equipped with two locking pins (32) and **in that** the guide sheath (30) is provided with two through-holes (31) separated from each other, intended to receive the two locking pins (32).

5. The device according to claim 1, **characterized in that** the or each locking pin (32) is borne by the chock (4) and is inserted, in the locked position of the chock, into a hole of the sheath (30) and into a hole (20) of the rail (2).

6. The device according to any one of the preceding claims, **characterized in that** the horizontal rail (2) has a circular straight cross-section and the head (3) is equipped with means for rotatably immobilizing same, these means being separate from the guide rail (2).

7. The device according to the preceding claim, **characterized in that** one of the means for rotatably immobilizing the head (3) comprises a brace (36) attached to the head (3) away from the longitudinal geometric axis of the sheath (30) and a slider plate (11) borne by the frame, extending parallel to the guide rail (2), on which the brace (36) bears slidably by its lower end.

8. The device according to claim 7, **characterized in that** the other means for rotatable immobilization comprises a first elongate stop (12) attached to the frame (1) and extending parallel to the guide rail (2) and a second stop (38) attached to the first sheath (30), this second stop (38) bearing slidably against the first stop (12).

9. The device according to any one of claims 1 to 4 and 6 to 8, **characterized in that** the chock (4) and the sheath (30) have an indexing means consisting of a spur (42) forming a radial protrusion on the cylindrical surface of the chock (4) and a notch (35a) formed at the end of the sheath (30), intended to receive the spur (42) when the chock (4) is in the locked position.

10. The device according to any one of the preceding claims, **characterized in that** it is provided with a means for detecting the locking position of the chock (4) and for detecting the locking position of the or each locking pin.

11. The device according to claims 2 and 10 taken together, **characterized in that** the detection means consists of a first detection element attached to a handle (41) that the chock (4) has, and a second detection element attached to the actuating lever (33), the two detection elements coming opposite each other when the chock (4) is in the locked position and when the or each locking pin is in the locking position, in the corresponding hole(s) (20) of the guide rail.

12. A loading dock installation, **characterized in that** it is equipped with a device according to any one of the preceding claims.

13. The installation according to the preceding claim, including a dock with an access means, capable of occupying a first position, allowing goods to be transferred between a warehouse and the transport vehicle, and a second position not allowing this transfer, **characterized in that** it includes a control unit, capable of activating the actuator (39a) in the locking direction of the pin (39), based on information supplied by a position detector associated with the access means, so as to not allow the pin (39) to be unlocked while said access means is in its first position.
